Europäisches Patentamt

European Patent Office

Office européen des brevets

(11) Numéro de publication: **0 260 170**
**B1**

## FASCICULE DE BREVET EUROPEEN

(45) Date de publication du fascicule du brevet:
**11.04.90**

(51) Int. Cl.⁴: **B60T 13/52**

(21) Numéro de dépôt: **87401837.7**

(22) Date de dépôt: **07.08.87**

(54) **Ensemble d'un servomoteur de freinage monté sur une paroi fixe d'un véhicule.**

(30) Priorité: **10.09.86 FR 8612668**

(43) Date de publication de la demande:
**16.03.88 Bulletin 88/11**

(45) Mention de la délivrance du brevet:
**11.04.90 Bulletin 90/15**

(84) Etats contractants désignés:
**DE ES GB IT**

(56) Documents cités:
**FR-A- 1 512 696**
**GB-A- 617 576**

(73) Titulaire: **BENDIX France, 126, rue de Stalingrad,
F-93700 Drancy(FR)**

(72) Inventeur: **Gautier, Jean-Pierre, 46ter Avenue Louis
Blanc, F-93600 Aulnay sous Bois(FR)**
Inventeur: **Blot, Jean-Claude, 37, rue Jules Fossier,
F-95380 Louvres(FR)**

(74) Mandataire: **Lejet, Christian et al, BENDIX FRANCE
Division Technique Service Brevets Bendix
Europe 126 rue de Stalingrad, F-93700 Drancy(FR)**

ACTORUM AG

## Description

La présente invention concerne les systèmes de freinage de véhicule selon la partie pré-caractérisante de la revendication 1.

Classiquement, (voir par exemple le document US-A-3 358 449), un servomoteur de freinage est monté sur la paroi fixe du véhicule au moyen d'au moins un boulon, typiquement deux boulons de montage introduits, depuis le compartiment moteur du véhicule, d'un côté de la paroi fixe, dans des orifices circulaires correspondants formés dans la paroi fixe, après quoi un écrou est vissé sur l'extrémité filetée de chaque boulon faisant saillie de l'autre côté de la paroi fixe, typiquement dans le compartiment voyageur du véhicule, le boulon étant vissé à fond pour venir coopérer en appui axial contre la face adjacente de la paroi fixe.

Les problèmes de compacité et d'encombrement des véhicules modernes rendent de plus en plus difficile l'accès à la face arrière de la paroi fixe, qui se trouve déportée profondément sous le tableau de bord, au voisinage de la console centrale de ce dernier et des ferrures de pédales, de sorte que la mise en place de l'écrou sur le boulon s'avère une opération longue et difficile pour l'opérateur, pouvant induire un faussage des filets de l'écrou et/ou du boulon et donc contribuer à la réalisation d'un assemblage imparfait voire défectueux.

La présente invention a pour objet de pallier ces inconvénients en proposant un ensemble d'un servomoteur de freinage monté sur une paroi fixe d'un véhicule, de conception nouvelle, évitant les problèmes de mise en place in situ de l'écrou sur le boulon et autorisant des cadences de montage plus élevées et avec une plus grande fiabilité, même dans le cas où l'accessibilité à la zone de montage du servomoteur dans le compartiment voyageur est extrêment réduite.

Pour ce faire, l'orifice dans la paroi fixe du véhicule présente une configuration allongée, typiquement sensiblement en forme d'arc de cercle, avec une première zone d'extrémité de section agrandie, permettant le passage de l'écrou préalablement engagé sur l'extrémité filetée du boulon, se raccordant à une seconde zone d'extrémité de l'orifice de section correspondant à celle du boulon.

Avec une tel agencement l'écrou peut être pré-vissé aisément sur le boulon, avant montage in situ, après quoi le boulon, portant l'écrou pré-vissé, est engagé au travers de la première zone d'extrémité de l'orifice, le servomoteur étant ensuite soumis manuellement à un déplacement adéquat, typiquement à une rotation autour de son axe, pour amener le boulon dans la seconde zone d'extrémité de l'orifice, l'écrou étant ensuite vissé à fond sur ce dernier au moyen d'une visseuse ou boulonneuse adéquate.

La présente invention a pour objet de proposer un ensemble du type considéré comportant des moyens pour maintenir le servomoteur assemblé dans la position requise, en évitant, par exemple sous l'effet de vibrations importantes, une tendance à ce que le servomoteur ne subisse un mouvement de rotation dans le sens contraire à celui du montage susceptible de ramener les boulons en face des première zones d'extrémité des orifices de la paroi fixe.

Pour ce faire, selon une caractéristique de l'invention, la paroi fixe comporte un moyen de retenue, susceptible de coopérer avec l'écrou vissé en configuration de vissage effectif sur le boulon se situant dans la seconde zone d'extrémité pour éviter une tendance au désassemblage de l'ensemble, et conforme à la partie caractéristique de la première revendication.

D'autres caractéristiques et avantages de la présente invention ressortiront de la description suivante de modes de réalisation, donnés à titre illustratif mais nullement limitatif, faite en relation avec les dessins annexés sur lesquels:

– la figure 1 est une vue schématique d'un ensemble d'un servomoteur de freinage monté sur une paroi fixe de véhicule;
– la figure 2 est une vue de l'arrière, schématique et partielle montrant la paroi fixe avec son orifice à profil variable selon un premier mode de réalisation de l'invention;
– la figure 3 est une vue schématique en coupe suivant la ligne de coupe III–III de la figure 2;
– la figure 4 est une vue analogue à la figure 2 montrant un second mode de réalisation de l'invention; et
– la figure 5 est une vue schématique en coupe suivant la ligne de coupe V–V de la zone de l'orifice de la paroi fixe de la figure 4.

Dans la description qui va suivre et sur les dessins, les éléments identiques ou analogues portent les mêmes chiffres de référence, éventuellement indicés.

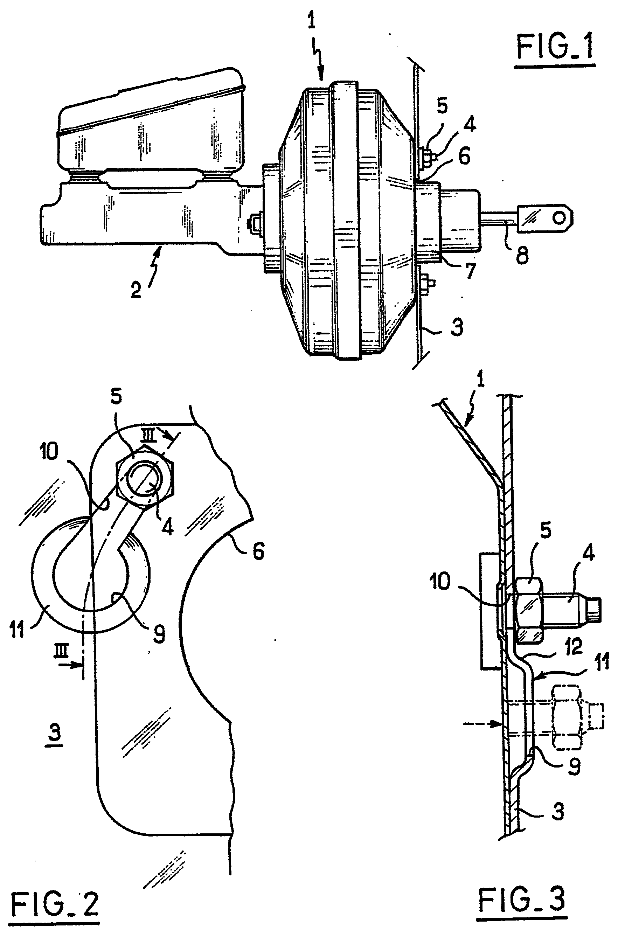

On a représenté sur la figure 1 un montage classique d'un servomoteur de freinage du type à dépression 1 couplé à un maître-cylindre de freinage 2 et monté en porte-à-faux sur la face antérieure d'une paroi fixe 3 d'un véhicule, typiquement la paroi dite "pare-feu", au moyen d'au moins un boulon 4 ayant une extrémité ou tête solidaire du boîtier du servomoteur 1 et traversant un orifice formé dans la paroi fixe 3, l'assemblage s'effectuant au moyen d'un écrou 5 vissé sur l'extrémité filetée du boulon 4 faisant saillie vers l'arrière par rapport à la paroi 3. Classiquement, la paroi 3 comporte une ouverture centrale 6 au travers de laquelle s'étend une partie arrière de moyeu de piston 7 du servomoteur 1 abritant un moyen de valve de distribution (non représenté) actionné par une tige d'entrée 8 s'étendant dans le compartiment voyageur du véhicule et destinée à être couplée à une pédale de freinage (non représentée) du véhicule.

On reconnaît sur les figures 2 et 3 la paroi fixe 3, le boulon 4 et son écrou 5. L'orifice dans la paroi 3 au travers duquel s'étend le boulon 4 présente une configuration allongée, avantageusement sensiblement en forme d'arc de cercle, avec une première zone d'extrémité élargie 9 de section supérieure à la section hors tout de l'écrou 5, se raccordant à une seconde zone d'extrémité 10 dont la section correspond à celle du boulon 4.

Avec un tel agencement, le boulon 5 est préalablement partiellement engagé sur l'extrémité filetée du boulon 4, puis (comme représenté en pointillés, sur la figure 3), le servomoteur est présenté devant la paroi 3 avec le boulon 4 portant son écrou 5 en face de la première zone d'extrémité 9 de section agrandie de l'orifice de la paroi, le servomoteur étant alors amené en butée par sa face arrière contre la face antérieure de la paroi 3 par une translation axiale, figurée par la flèche en pointillés sur la figure 3, en faisant passer le boulon avec son écrou au travers de la première zone d'extrémité 9 de l'orifice, après quoi on fait subir au servomoteur une rotation (dextrogyre sur la figure 2) amenant le boulon 4 en butée contre l'extrémité de la seconde zone d'extrémité 10 de l'orifice de la paroi, l'écrou 5 étant alors vissé à fond sur le boulon 4 pour solidariser fermement l'un à l'autre le servomoteur 1 et la paroi 3, comme figuré en traits pleins sur la figure 3.

Conformément à l'invention, pour éviter que, sous l'effet de sollicitations diverses, notamment de vibrations importantes, le servomoteur ne puisse progressivement tourner depuis sa position de montage final vers une position où l'écrou 5 reviendrait en regard de la première zone 9 de section agrandie de l'orifice, on prévoit sur la paroi 3 des moyens de retenue susceptibles de coopérer en butée avec l'écrou 5 vissé à fond dans la position de montage final et s'opposant donc à cette rotation du servomoteur. Dans le mode de réalisation des figures 2 et 3, les moyens de retenue sont constitués par une zone estampée en forme de cuvette 11 coaxiale à la première zone d'extrémité 9 de l'orifice de la paroi, de façon à définir ainsi une partie en saillie ou épaulement 12 au niveau de la zone de raccordement entre les deux zones d'extrémité 9 et 10 de l'orifice de la paroi, cet épaulement 12 s'interposant alors sur le trajet de l'écrou 5 dans le cas où le boulon 4 quitterait le fond de la seconde zone d'extrémité 10 pour se rapprocher de la première zone d'extrémité 9.

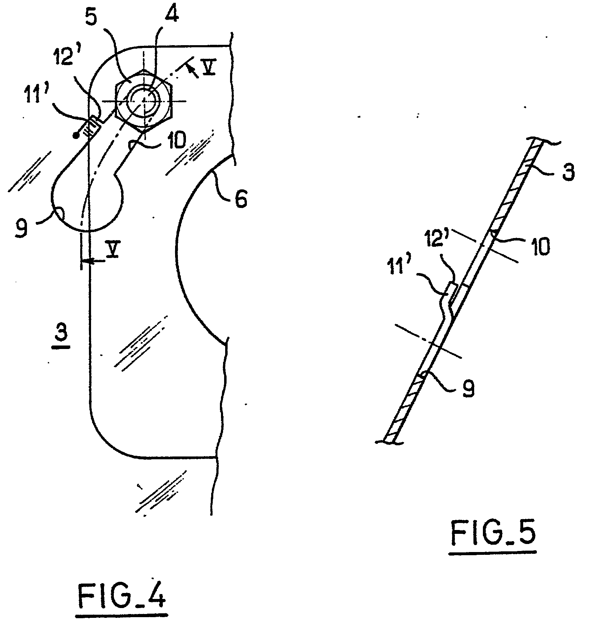

Dans la variante de réalisation des figures 4 et 5, les moyens de retenue sont constitués par une patte 11′ découpée dans le bord de l'orifice de la paroi au niveau de la zone de raccordement entre les première et seconde zones d'extrémité 9 et 10 et rabattue vers l'arrière pour constituer une arête 12′ susceptible de s'interposer sur le trajet de l'écrou 5 dans le cas où le boulon 4 quitterait sa position de montage dans le fond de la seconde zone d'extrémité 10 pour revenir vers la première zone d'extrémité 9 de section agrandie.

## Revendications

1. Ensemble d'un servomoteur de freinage (1) monté sur une paroi fixe (3) d'un véhicule, comprenant au moins un boulon de montage (4) solidaire du servomoteur et traversant un orifice (9, 10) formé dans la paroi, et un écrou (5) vissé sur l'extrémité filetée du boulon faisant saillie par rapport à la paroi, caractérisé en ce que ledit orifice présente une configuration allongée sensiblement en forme d'arc de cercle avec une première zone d'extrémité (9) de section agrandie permettant le passage de l'écrou (5) engagé sur l'extrémité du boulon (4), se raccordant à une seconde zone d'extrémité (10) de section correspondant à celle du boulon (4), et en ce que la paroi (3) comporte un moyen de retenue constitué par une partie en saillie (11, 11′) de la paroi (3) adjacente à l'orifice entre les première (9) et seconde (10) zones d'extrémités de ce dernier et susceptible de coopérer avec l'écrou (5) en position de vissage effectif sur le boulon (4) reçu dans la seconde zone d'extrémité (10) de l'orifice pour limiter une tendance au désassemblage de l'ensemble.

2. Ensemble selon la revendication 1, caractérisé en ce que la partie en saillie (11) est constituée par une zone estampée en forme de cuvette coaxiale à la première zone d'extrémité (9) de l'orifice.

3. Ensemble selon la revendication 1, caractérisé en ce que la partie en saillie (11′) est constituée par une patte pliée découpée dans le bord de l'orifice entre les première (9) et seconde (10) zones d'extrémité de ce dernier.

## Patentansprüche

1. Bremskraftverstärker-Einheit (1), die an einer festen Wand (3) eines Fahrzeuges angebracht ist, mit mindestens einer Befestigungsschraube (4), die mit dem Bremskraftverstärker fest verbunden ist und sich durch eine Öffnung (9, 10) in der Wand erstreckt, und mit einer Mutter (5), welche auf das bezüglich der Wand vorstehende Gewindeende der Schraube aufgeschraubt ist, dadurch gekennzeichnet, daß die Öffnung eine im wesentlichen kreisbogenförmige längliche Konfiguration mit einem ersten Endbereich (9) von erweitertem Querschnitt aufweist, der ein Hindurchstecken der auf dem Ende der Schraube (4) sitzenden Mutter (5) erlaubt und welcher sich an einen zweiten Endbereich (10) anschließt, dessen Querschnitt dem der Schraube (4) entspricht, und daß die Wand (3) ein Haltemittel aufweist, das von einem vorstehenden Abschnitt (11, 11′) der Wand (3) angrenzend an der Öffnung zwischen dem ersten (9) und dem zweiten (10) Endbereich gebildet wird und mit der Mutter (5) in der Stellung, in der sie auf die in dem zweiten Endbereich (10) der Öffnung sitzenden Schraube (4) aufgeschraubt ist, zusammenwirkt, um ein Lösen der Einheit zu vermeiden.

2. Einheit nach Anspruch 1, dadurch gekennzeichnet, daß der vorstehende Abschnitt (11) von einem schalenförmigen geprägten Bereich gebildet wird, der koaxial zu dem ersten Endbereich (9) der Öffnung ist.

3. Einheit nach Anspruch 1, dadurch gekennzeichnet, daß der vorstehende Abschnitt (11′) von einer herausgebogenen Zunge gebildet wird, die in den Rand der Öffnung zwischen dem ersten (9) und zweiten (10) Endbereich des letzteren eingeschnitten ist.

## Claims

1. Brake booster unit (1) mounted on a fixed wall (3) of a vehicle, possessing at least one assembly bolt (4), fixed to the booster and passing through an orifice (9, 10) made in the wall, and a nut (5) screwed onto the threaded end of the bolt projecting relative to the wall, characterized in that the orifice has an elongate arc shape with a first end zone (9) of enlarged cross-section, allowing the passage of the nut (5) engaged on the end of the bolt (4), and connected to a second end zone (10) of a cross-section corresponding to that of the bolt (4), and in that the wall (3) has a retention means (11, 11') consisting of a projecting part (11, 11') of the wall (3), adjacent to the orifice between the first (9) and second (10) end zones of the latter and being capable of interacting with the nut (5) in the effective screwing position on the bolt (4) received in the second end zone (10) of the orifice, in order to limit a tendency for the unit to come apart.

2. Unit according to Claim 1, characterized in that the projecting part (11) consists of a stamped dish-shaped zone coaxial relative to the first end zone (9) of the orifice.

3. Unit according to Claim 3, characterized in that the projecting part (11') consists of a bent lug cut in the edge of the orifice between the first (9) and second (10) end zones of the latter.

FIG_1

FIG_2

FIG_3

FIG_4

FIG_5